(19) Europäisches Patentamt / European Patent Office / Office européen des brevets

(11) **EP 1 938 152 B1**

(12) **EUROPEAN PATENT SPECIFICATION**

(45) Date of publication and mention
of the grant of the patent:
**15.08.2012   Bulletin 2012/33**

(51) Int Cl.:
*G03H 1/00* (2006.01)   *G02B 5/32* (2006.01)
*G02B 5/18* (2006.01)   *G02B 27/42* (2006.01)

(21) Application number: **05757104.4**

(22) Date of filing: **03.06.2005**

(86) International application number:
**PCT/US2005/019368**

(87) International publication number:
**WO 2006/132614 (14.12.2006 Gazette 2006/50)**

(54) **GENERAL DIFFRACTIVE OPTICS METHOD FOR EXPANDING AN EXIT PUPIL**

ALLGEMEINES BEUGEOPTIKVERFAHREN ZUM ERWEITERN EINER AUSGANGSPUPILLE

PROCEDE GENERAL D'OPTIQUE A DIFFRACTION PERMETTANT D'AGRANDIR UNE PUPILLE
DE SORTIE

(84) Designated Contracting States:
**AT BE BG CH CY CZ DE DK EE ES FI FR GB GR
HU IE IS IT LI LT LU MC NL PL PT RO SE SI SK TR**

(43) Date of publication of application:
**02.07.2008   Bulletin 2008/27**

(73) Proprietor: **Nokia Corporation
02150 Espoo (FI)**

(72) Inventor: **LEVOLA, Tapani
33270 Tampere (FI)**

(74) Representative: **Thould, Lee Matthew et al
Swindell & Pearson Limited
48 Friar Gate
Derby DE1 1GY (GB)**

(56) References cited:
**WO-A-2004/109349     US-B1- 6 580 529**

**Description**

<u>Technical Field</u>

The present invention relates generally to a display device and, more specifically, to a general diffractive optics method that uses a plurality of diffractive elements for expanding the exit pupil of a display for viewing.

<u>Background Art</u>

While it is a common practice to use a low-resolution liquid-crystal display (LCD) panel to display network information and text messages in a mobile device, it is preferred to use a high-resolution display to browse rich information content of text and images. A microdisplay-based system can provide full color pixels at 50-100 lines per mm. Such high-resolution is generally suitable for a virtual display. A virtual display typically consists of a microdisplay to provide an image and an optical arrangement for manipulating light emerging from the image in such a way that it is perceived as large as a direct view display panel. A virtual display can be monocular or binocular.

The size of the beam of light emerging from imaging optics toward the eye is called exit pupil. In a Near-Eye Display (NED), the exit pupil is typically of the order of 10mm in diameter. Further enlarging the exit pupil makes using the virtual display significantly easier, because the device can be put at a distance from the eye. Thus, such a display no longer qualifies as an NED, for obvious reasons. Head-Up Displays are examples of the virtual display with a sufficiently large exit pupil.

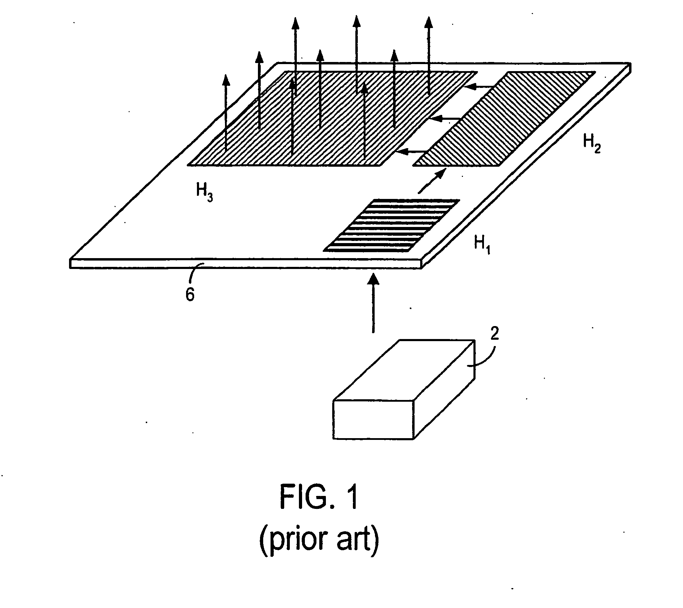

PCT patent application WO 99/52002 "Holographic optical Devices" by Yaakov Amitai and Asher Friesem and US patent US 6,580,529 Holographic optical Devices" by Yaakov Amitai and Asher Friesem disclose a method of enlarging the exit pupil of a virtual display. The disclosed method uses three successive holographic optical elements (HOEs) to enlarge the exit pupil. In particular, the HOEs are diffractive grating elements arranged on a planar, light transmissive substrate **6,** as shown in Figure 1. As shown, light from an image source **2** is incident upon the first HOE, or **H1,** which is disposed on one side of the substrate **6.** Light from **H1,** coupled to the substrate **6,** is directed toward the second HOE, or **H2,** where the distribution of light is expanded in one direction. **H2** also redirects the expanded light distribution to the third HOE, or **H3,** where the light distribution is further expanded in another direction. The holographic elements can be on any side of the substrate 6. **H3** also redirects the expanded light distribution outward from the substrate surface on which **H3** is disposed. The optical system, as shown in Figure 1, operates as a beam-expanding device, which approximately maintains the general direction of the light beam. Such a device is also referred to as an exit pupil expander (EPE). A similar system is disclosed in US patent US 6,580,529.

In an EPE, the energy of the exit beam relative to the input beam depends upon the coupling between adjacent optical elements. As the energy output of the image source is limited, it is desirable to achieve a high coupling efficiency between adjacent optical elements.

<u>Disclosure of the Invention</u>

The object of the present invention is to provide a general diffractive optics method that uses a plurality of diffractive elements on an optical substrate for expanding the exit pupil of a display of an electronic device for viewing.

According to the invention there is provided an optical device according to claims 1 to 7, a method according to claims 8 to 13, an electronic device according to claims 14 to 19, and a mobile phone comprising the optical device according to claims 1 to 7.

<u>Brief Description of the Drawings</u>

For a better understanding of the nature and objects of the present invention, reference is made to the following detailed description taken in conjunction with the following drawings, in which:

Figure 1 is a schematic representation showing a prior art exit pupil extender using three diffractive elements.
Figure 2 is a schematic representation showing geometry of a generalized 2D exit pupil expander
Figure 3 is a schematic representation of an electronic device, having a virtual display system.

<u>Modes for Carrying Out the Invention</u>

The object of the present invention is to provide a general diffractive optics method that uses a plurality of diffractive elements on an optical substrate for expanding the exit pupil of a display of an electronic device for viewing. The general diffractive optics method of the present invention can be applied to a broad optical spectral range of optical beams but most importantly to a visible part of the of optical spectrum where the optical beams are called light beams.

According to an example, this method can be used for optical coupling in an optical device and it is characterized by expanding of an exit pupil of an input optical (e.g., light) beam provided in an output optical (e.g., light) beam, wherein the optical device comprises: a substrate of optical material (or an optical substrate) having a first surface and an opposing second surface; a first (in-coupling) diffractive element disposed on the substrate for receiving an input optical beam defined by a wave-vector **k** and containing periodic lines with a period d; a second (out-coupling) diffractive element disposed on the substrate in relationship with the first diffractive element and containing further periodic lines with the period d, wherein an angle between the periodic lines and the further periodic lines is 2p; and an intermediate (expanding) diffractive element disposed adjacent to the first and the second diffractive elements.

Furthermore, at least part of the received optical beam is diffracted in the first diffractive element for providing a diffracted optical component to the intermediate diffractive element substantially within the first and second surfaces (e.g., undergoing a total internal reflection). Moreover, at least part of the diffracted optical component in the intermediate diffractive element is coupled to the second diffractive element substantially between the first and second surfaces (again, e.g., undergoing a total internal reflection) so as to allow at least part of the coupled diffracted optical component to exit the substrate by diffraction in the second diffractive element thus providing an output optical beam defined by a further wave-vector **k1**. Typically, the second diffractive element generates also another output beam, which wave-vector is a mirror image of the wave vector **k1** with respect to the substrate surface. As this wave vector is otherwise identical to the wave vector **k1** and in real applications it is intentionally damped to a low value, therefore it is not be considered further separately from the wave vector **k1.**

According to an example, the intermediate diffraction grating contains still further periodic lines with an angle (or a rotation angle) between the periodic lines of the first diffractive element and the still further periodic lines of ρ, and the period d' of the still further periodic lines is given by

$$d' = d/2\cos\rho \hspace{4cm} (1).$$

Furthermore, according to an example, when the period of the intermediate diffractive element is set to d/2cosp (Equation 1), the further wave-vector **k1** has exactly the same direction as the wave-vector **k** of said input optical beam, i.e., the system is geometrically accurate.

According to an example, a optical component is incident and diffracted to a first order on the intermediate diffraction element an uneven number of times before providing said at least part of the diffracted optical component to the second diffraction element. Moreover, according to an example , the first diffractive element, the second diffractive element or the intermediate diffractive element can be disposed on the first surface or on the second surface of the optical substrate. Furthermore, according to an example , the first diffractive element, the second diffractive element or the intermediate diffractive element can be a planar diffraction grating manufactured using lithographic methods or classically ruled (having different groove angles and profiles, such as binary, triangular, sinusoidal, etc.).

The generalized method provides conditions for supporting a broad variety of rotation angles ρ such that the system is geometrically accurate (i.e., wave-vectors **k** and **k1** has the same direction). The period of the first diffractive element is such that it supports only zero and first order transmissive diffraction modes, which are used to couple the light into the substrate. It is shown below that if the intermediate diffractive element supports only the zero and first order reflective modes and other modes are forbidden, then the system can support a broad range of rotation angles 0<ρ<70°. That means that a broad range of conical incident angles (at least between 0 and 70° and beyond) can be supported by the intermediate diffractive element (the conical angle is an angle between the plane of an incident beam and a plane perpendicular to the periodic lines).

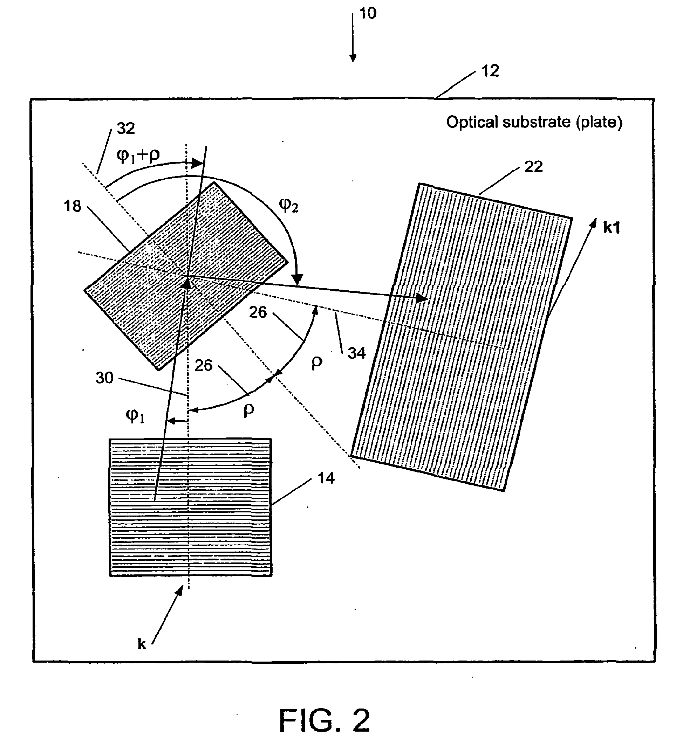

Figure 2 shows one example among others of a schematic representation for geometry of a generalized two-dimensional (2D) exit pupil expander (EPE) **10** . Figure illustrates the general diffractive optics method described above.

Figure 2 shows a top view of an optical substrate (plate) **12** having index of refraction n with three diffractive elements disposed on the optical substrate **12**: the first (in-coupling) diffractive element (an in-coupling diffraction grating) **14** having the line period d, the intermediate (expanding) diffracting element (an intermediate diffraction grating) **18** having the line period d' given by the Equation 1 and the second diffractive element (an out-coupling diffraction grating) **22** having the line period d. The line periods d and d' are chosen such that appropriate conditions are satisfied for a total internal reflection in the optical substrate (waveguide) **12**. Typically, the grating **14** supports transmissive modes of orders 0, -1 and +1 and a reflective zero order. The grating **18** supports reflective modes of orders 0, **-1,** and the grating **22** supports reflective modes of orders 0, -1 and -2 and the transmissive modes of orders -1 in the case of +1 transmissive coupling in the in-coupling grating. If we choose -1 mode in the in-coupling, the signs of the modes change. Physically both cases are identical, and it is enough to consider only the +1 in-coupling case. The rotation angle ρ **26** marks the orientation of the intermediate diffraction grating **18** with respect to the in-coupling diffraction grating **14.** The input optical beam entering the in-coupling diffraction grating **14** is described by a wave-vector **k** which has component angles ($\theta_0$, $\varphi_0$) which are formed with a coordinate axis **30** and an axis perpendicular to the surface of the optical substrate **12,** respectively. After propagating through, the optical beam inside the optical substrate **12** with respect to the intermediate diffraction grating **18** has the component angles ($\theta_1$, $\theta_1$, + $\rho$) which are formed with a coordinate axis **32** and the axis perpendicular to the surface of the optical substrate **12,** respectively, wherein

$$\begin{cases} n\sin\theta_1 \sin\varphi_1 = \sin\theta_0 \sin\varphi_0 = \gamma \\ n\sin\theta_1 \cos\varphi_1 = \sin\theta_0 \cos\varphi_0 + \dfrac{\lambda}{d} = \alpha_0 + \dfrac{\lambda}{d} \end{cases} \qquad (2).$$

In Equation 2 the +1 diffraction mode in chosen in the in-coupling diffraction grating **14.** After the intermediate diffraction grating **18,** the optical beam is described by angles ($\theta_2$, $\varphi_2$), which are formed with a coordinate axis **34** and the axis perpendicular to the surface of the optical substrate **12,** respectively, and which are governed by equations

$$\begin{cases} n\sin\theta_2 \sin\varphi_2 = n\sin\theta_1 \sin(\varphi_1 + \rho) = \gamma\cos\rho + \alpha_0\sin\rho \\ n\sin\theta_2 \cos\varphi_2 = n\sin\theta_1 \cos(\varphi_1 + \rho) + m\dfrac{\lambda}{d}2\cos\rho = \alpha_0\cos\rho - \gamma\sin\rho + (2m+1)\dfrac{\lambda}{d}\cos\rho \end{cases}$$
$$(3).$$

It is noted that the diffraction mode for the intermediate diffraction grating **18** must be m = -1. Now the out-coupling diffraction grating **22** has to be rotated by an angle $\rho$ **26** with respect to the intermediate diffraction grating **18,** in order to preserve the angles (the original direction of the input optical beam). The angles of the diffraction mode 1 after the out-coupling diffraction grating **22** are ($\theta_3$, $\varphi_3$) and they are defined by equations

$$\begin{cases} \sin\theta_3 \sin\varphi_3 = n\sin\theta_2 \sin(\varphi_2 + \rho) = \gamma\cos 2\rho + \alpha_0\sin 2\rho \\ \sin\theta_3 \cos\varphi_3 = n\sin\theta_2 \cos(\varphi_2 + \rho) + \dfrac{\lambda}{d} = \alpha_0\cos 2\rho - \gamma\sin 2\rho \end{cases} \qquad (4).$$

Finally, the out-coupled angles must be brought back to the original coordinates. Therefore the coordinates must be rotated by an amount -2p. Thus the out-coupled angles ($\theta_{out}$, $\varphi_{out}$), which are components of a wave-vector **k1** are equal to incoming angles ($\theta_0$, $\varphi_0$):

$$\begin{cases} \sin\theta_{out} \sin\varphi_{out} = \sin\theta_3 \sin(\varphi_3 - 2\rho) = \gamma = \sin\theta_0 \sin\varphi_0 \\ \sin\theta_{out} \cos\varphi_{out} = \sin\theta_3 \cos(\varphi_3 - 2\rho) = \alpha_0 = \sin\theta_0 \cos\varphi_0 \end{cases} \qquad (5).$$

and the system is geometrically accurate (i.e., wave-vectors **k** and **k1** has the same direction).
If $\rho$ = 0, the period of intermediate diffraction grating **18** is $d / 2$ and we have a reflector that reflects the light back to the direction it came from. This can be used at the end of the plate to circulate the light. The case when $\rho$ = 45°

gives a period of $d / \sqrt{2}$, which is a special case of this general 2D exit pupil expander (EPE).

There is another requirement for the grating period. In the intermediate diffraction grating **18** there can be only one reflective diffraction mode (in addition to zero order) and no transmissive modes. From Equation 3 the wave-vector component in the direction perpendicular to the surface of the optical substrate **12** inside the optical substrate **12** can be calculated. We thus get a condition for modes -1 and 0 to exist as described by

$$n > \frac{\lambda}{d} \qquad (6).$$

This condition of Equation 6 is valid in all practical cases as far the rotation angle **26** is concerned.

The condition that there are no transmissive modes in the diffraction grating **18** is $\lambda / d > 1$ and it is valid in all practical cases. Another requirement is that no other reflected modes should exist in the diffraction grating **18.** It is enough to consider only the lowest of the diffraction modes, *i.e.,* -2 and +1, and we get accordingly a condition

$$\sqrt{1 + 8\cos^2 \rho} > \frac{nd}{\lambda} \qquad (7).$$

This condition described by Equation 7 is typically valid for $0 < \rho < 70°$. That means that a broad range of conical incident angles (at least between 0 and 70° and beyond) can be supported by the intermediate diffraction grating **18** (the conical angle is the angle $\varphi_1 + \rho$).

The efficiency of the intermediate diffraction grating **18** reaches very high values at about 60° rotation angle **26** such that the diffraction efficiencies are almost equal for both TE and TM polarizations. Further discussions of ways to improve diffraction efficiencies for both TE and TM polarization modes are provided in the US patent application 11/011,481 "Method and System for Beam Expansion in a Display Device" by T. Levola, filed December 13, 2004 , and published as US 2006/0126181.

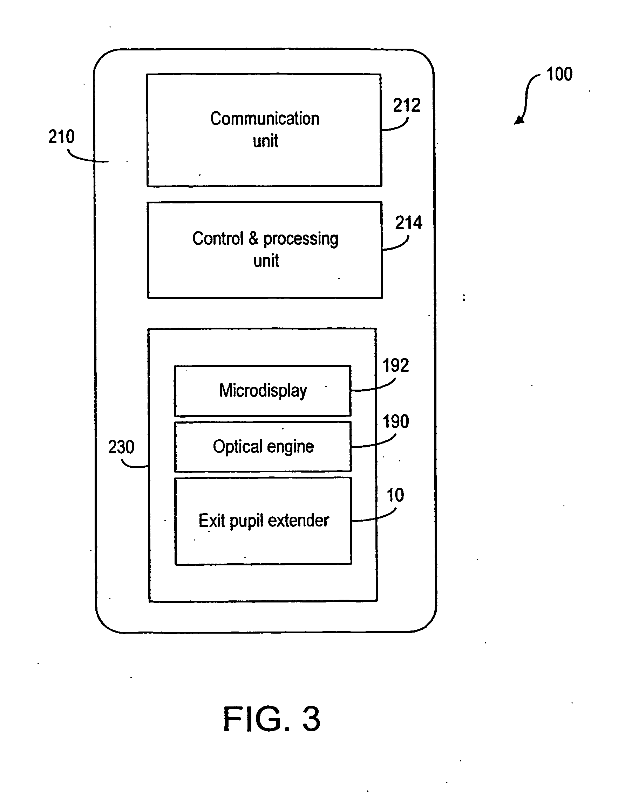

The exit pupil expander (EPE) **10** can be used in an electronic (portable) device **100,** such as a mobile phone, personal digital assistant (PDA), communicator, portable Internet appliance, hand-hand computer, digital video and still camera, wearable computer, computer game device, specialized bring-to-the-eye product for viewing and other portable electronic devices. As shown in Figure 3, the portable device **100** has a housing **210** to house a communication unit **212** for receiving and transmitting information from and to an external device (not shown). The portable device **100** also has a controlling and processing unit **214** for handling the received and transmitted information, and a virtual display system **230** for viewing. The virtual display system **230** includes a micro-display or an image source **192** and an optical engine **190.** The controlling and processing unit **214** is operatively connected to the optical engine **190** to provide image data to the image source **192** to display an image thereon. The EPE 10, according to the present invention, can be optically linked to an optical engine 190.

Furthermore, the image source 192, as depicted in Figure 3, can be a sequential color LCOS (Liquid Crystal On Silicon) device, an OLED (Organic Light Emitting Diode) array, an MEMS (MicroElectro Mechanical System) device or any other suitable micro-display device operating in transmission, reflection or emission.

Moreover, the electronic device 100 can be a portable device, such as a mobile phone, personal digital assistant (PDA), communicator, portable Internet appliance, hand-held computer, digital video and still camera, wearable computer, computer game device, specialized bring-to-the-eye product for viewing and other portable electronic devices. However, the exit pupil expander, according to the present invention, can also be used in a non-portable device, such as a gaming device, vending machine, band-o-matic, and home appliances, such as an oven, microwave oven and other appliances and other non-portable devices.

It is to be understood that the above-described arrangements are only illustrative of the application of the principles of the present invention. Numerous modifications and alternative arrangements may be devised by those skilled in the art without departing from the scope of the appended claims which are intended to cover such modifications and arrangements.

### Claims

1. An optical device, comprising:

   a substrate (12) of optical material having a first surface and an opposing second surface;
   a first diffractive element (14) disposed on the substrate for receiving an input optical beam defined by a wave-vector **k** and containing periodic lines with a period d;
   a second diffractive element (22) disposed on the substrate in relationship with the first diffractive element and containing further periodic lines with a period d, wherein an angle between said periodic lines and said further periodic lines is 2 $\rho$ ; and

an intermediate diffractive element (18) disposed on said substrate adjacent to the first and the second diffractive elements and containing still further periodic lines with the period d/2cos ρ, wherein ρ is an angle between said periodic lines and the still further periodic lines, wherein the optical device is configured such that
at least part of the input optical beam is diffracted in the first diffractive element for providing a diffracted optical component to the intermediate diffractive element substantially within the first and second surfaces, and
at least part of the diffracted optical component in the intermediate diffractive element is coupled to the second diffractive element substantially between the first and second surfaces so as to allow at least part of the coupled diffracted optical component to exit the substrate by diffraction in the second diffractive element for providing an output optical beam defined by a further wave-vector **k1** having exactly the same direction as the wave-vector **k** of said input optical beam,
**characterized in that** said angle ρ is substantially equal to 60°,.

2. The optical device of claim 1, wherein said optical device is for extending of an exit pupil of said input optical beam by providing said output optical beam.

3. The optical device of claim 1, wherein the optical device is configured such that said diffracted optical component is incident and subsequently diffracted to a first diffraction order on the intermediate diffractive element an uneven number of times before providing said at least part of the diffracted light component to said second diffractive element.

4. The optical device of claim 1, wherein said intermediate diffractive element is configured to support only reflective zero and first order diffraction modes, or an index of refraction of said substrate is n> λ /d, wherein λ is a wavelength of the input optical beam.

5. The optical device of claim 1, wherein the intermediate diffractive element is configured not to support a second or higher order diffraction modes, which is enforced by a condition expressed as $\sqrt{1 + 8\cos^2 \rho} > \dfrac{nd}{\lambda}$ , wherein n is an index of refraction of said substrate, λ is a wavelength of the input optical beam.

6. The optical device of claim 1, wherein the optical device is configured such that a predetermined condition is maintained, said condition is that transmission diffraction modes are unsupported for said intermediate diffractive element, which is enforced by a condition expressed as $\lambda/d > 1$, wherein λ is a wavelength of the input optical beam.

7. The optical device of claim 1, wherein said first diffractive element, said second diffractive element or said intermediate diffractive element is disposed on said first surface or on said second surface.

8. A method for extending an exit pupil of an input optical beam, said method comprising:

receiving the input optical beam defined by a wave-vector k at a first diffractive element (14) containing periodic lines with a period d and disposed on a substrate (12) of optical material having a first surface and an opposing second surface;
diffracting at least part of the input optical beam in the first diffractive element for providing a diffracted optical component to an intermediate diffractive element (18) substantially within the first and second surfaces;
further diffracting said diffracted optical component by said intermediate diffractive element; and
coupling at least part of said diffracted optical component in the intermediate diffractive element to a second diffractive element (22) substantially between the first and second surfaces so as to allow at least part of the coupled diffracted optical component to exit the substrate by diffraction in the second diffractive element for providing an output optical beam defined by a further wave-vector **k1** having exactly the same direction as the wave-vector **k** of said input optical beam for extending of the exit pupil of an input optical beam, wherein
said second diffractive element is disposed on said substrate in relationship with the first diffractive element and contains further periodic lines with a period d and wherein an angle between said periodic lines and said further periodic lines is 2 ρ and
said intermediate diffractive element is disposed adjacent to the first and the second diffractive elements and contains still further periodic lines with the period d/2cos ρ, wherein ρ is an angle between said periodic lines and the still further periodic lines,
**characterized in that** said angle ρ is substantially equal to 60°.

9. The method of claim 8, wherein said diffracted optical component is incident and subsequently diffracted to a first diffraction order on the intermediate diffractive element an uneven number of times before said at least part of the diffracted light component is provided to said second diffractive element.

10. The method of claim 8, wherein said intermediate diffractive element is configured to support only zero and first order reflective diffraction modes, or an index of refraction of said substrate is $n > \lambda /d$, wherein $\lambda$ is a wavelength of the input optical beam.

11. The method of claim 8, wherein the intermediate diffractive element is configured not to support a second or higher order diffraction modes, which is enforced by a condition expressed as $\sqrt{1 + 8\cos^2 \rho} > \dfrac{nd}{\lambda}$, wherein n is an index of refraction of said substrate, $\lambda$ is a wavelength of the input optical beam.

12. The method of claim 8, wherein the intermediate diffractive element is configured not to support transmission diffraction modes, which is enforced by a condition expressed as $\lambda /d > 1$, wherein $\lambda$ is a wavelength of the input optical beam.

13. The method of claim 8, wherein said first diffractive element, said second diffractive element or said intermediate diffractive element is disposed on said first surface or on said second surface.

14. An electronic device, comprising:

a data processing unit;
an optical engine operatively connected to the data processing unit for receiving image data from the data processing unit;
a display device operatively connected to the optical engine for forming an image based on the image data; and
an exit pupil expander,
said exit pupil expander being the optical device of one or more of claims 1 to 7.

15. The electronic device of claim 14, wherein said intermediate diffractive element is configured to support only reflective zero and first order reflective diffraction modes, or an index of refraction of said substrate is $n > \lambda /d$, wherein $\lambda$ is a wavelength of the input optical beam.

16. The electronic device of claim 14, wherein the intermediate diffractive element is configured not to support a second or higher order diffraction modes, which is enforced by a condition expressed as $\sqrt{1 + 8\cos^2 \rho} > \dfrac{nd}{\lambda}$, wherein n is an index of refraction of said substrate, $\lambda$ is a wavelength of the input optical beam.

17. The electronic device of claim 14, wherein the intermediate diffractive element is configured not to support transmission diffraction modes, which is enforced by a condition expressed as $\lambda / d > 1$, wherein $\lambda$ is a wavelength of the input optical beam.

18. The electronic device of claim 14, wherein said electronic device is a digital camera, a computer game device, a wireless device, a portable device or a mobile terminal.

19. The electronic device of claim 14, further comprising a communications unit for receiving signals containing information indicative of the image data, wherein the data processing unit is operatively connected to the communications unit for receiving the information.

20. A mobile phone comprising the optical device of one or more of claims 1 to 7.

**Patentansprüche**

1. Optische Vorrichtung, umfassend:

ein Substrat (12) aus einem optischen Material mit einer ersten Oberfläche und einer gegenüberliegenden zweiten Oberfläche;

ein erstes Beugungselement (14), das auf dem Substrat angeordnet ist, um einen einfallenden optischen Strahl zu empfangen, der durch einen Wellenvektor **k** definiert ist, und der regelmäßige Linien mit einer Gitterkonstante d enthält;

ein zweites Beugungselement (22), das in Bezug auf das erste Beugungselement auf dem Substrat angeordnet ist, und das weitere regelmäßige Linien mit einer Gitterkonstante d enthält, wobei ein Winkel zwischen den regelmäßigen Linien und

den weiteren regelmäßigen Linien 2p beträgt; und

ein Zwischen-Beugungselement (18), das auf dem Substrat benachbart zu dem ersten und dem zweiten Beugungselementen angeordnet ist, und das noch weitere regelmäßige Linien mit der Gitterkonstante d/2cos ρ enthält, wobei ρ ein Winkel zwischen den regelmäßigen Linien und den noch weiteren regelmäßigen Linien ist, wobei die optische Vorrichtung so konfiguriert ist, dass

mindestens ein Teil des einfallenden optischen Strahls in dem ersten Beugungselement gebeugt wird, um dem mittleren Beugungselement eine gebeugte optische Komponente bereitzustellen, im Wesentlichen innerhalb der ersten und der zweiten Oberfläche, und

mindestens ein Teil der gebeugten optischen Komponente in dem Zwischen-Beugungselement an das zweite Beugungselement gekoppelt wird, im Wesentlichen zwischen der ersten und der zweiten Oberfläche, um es zu gestatten, dass zumindest ein Teil der gekoppelten gebeugten optischen Komponente das Substrat durch Beugung an dem zweiten Beugungselement verlässt, um einen ausfallenden optischen Strahl bereitzustellen, der durch einen weiteren Wellenvektor **k1** definiert ist, der exakt die selbe Richtung wie der Wellenvektor **k** des einfallenden optischen Strahls aufweist,

**dadurch gekennzeichnet, dass** der Winkel ρ im Wesentlichen gleich 60° ist.

2. Optische Vorrichtung nach Anspruch 1, wobei die optische Vorrichtung dazu dient, eine Austrittspupille des einfallenden optischen Strahls aufzuweiten, indem der ausfallende optische Strahl bereitgestellt wird.

3. Optische Vorrichtung nach Anspruch 1, wobei die optische Vorrichtung so konfiguriert ist, das die gebeugte optische Komponente auf das Zwischen-Beugungselement einfällt und nachfolgend in eine Beugung erster Ordnung auf dem Zwischen-Beugungselement gebeugt wird, eine ungerade Anzahl von Malen, bevor der mindestens eine Teil des gebeugten Lichts dem zweiten Beugungselement bereitgestellt wird.

4. Optische Vorrichtung nach Anspruch 1, wobei das Zwischen-Beugungselement konfiguriert ist, nur reflektive Beugungsmoden nullter und erster Ordnung zu unterstützen oder wobei ein Brechungsindex des Substrats n > λ/d ist, wobei λ eine Wellenlänge des einfallenden optischen Strahls ist.

5. Optische Vorrichtung nach Anspruch 1, wobei das Zwischen-Beugungselement konfiguriert ist, Beugungsmoden einer zweiten oder höheren Ordnung nicht zu unterstützen, was durch eine Bedingung erzwungen wird, die als

$$\sqrt{1 + 8\cos^2 \rho} > \frac{nd}{\lambda}$$ ausgedrückt wird, wobei n ein Brechungsindex des Substrats ist und wobei λ eine Wellenlänge des einfallenden optischen Strahls ist.

6. Optische Vorrichtung nach Anspruch 1, wobei die optische Vorrichtung konfiguriert ist, sodass eine vorbestimmte Bedingung aufrechterhalten wird, wobei die Bedingung darin besteht, dass die Beugungs-Transmissionsmoden nicht durch das Zwischen-Beugungselement unterstützt werden, was durch eine Bedingung erzwungen wird, die als λ/$d$ > 1 ausgedrückt wird, wobei λ eine Wellenlänge des einfallenden optischen Strahls ist.

7. Optische Vorrichtung nach Anspruch 1, wobei das erste Beugungselement, das zweite Beugungselement oder das Zwischen-Beugungselement auf der ersten Oberfläche oder auf der zweiten Oberfläche angeordnet ist.

8. Verfahren zum Aufweiten einer Austrittspupille eines einfallenden optischen Strahls, wobei das Verfahren umfasst:

Empfangen des einfallenden optischen Strahls, der durch einen Wellenvektor **k** definiert ist, an einem ersten Beugungselement (14), das regelmäßige Linien mit einer Gitterkonstante d enthält und das auf einem Substrat (12) aus einem optischen Material angeordnet ist, das eine erste Oberfläche und eine gegenüberliegende zweite Oberfläche aufweist;

Beugen mindestens eines Teils des einfallenden optischen Strahls an dem ersten Beugungselement, um eine gebeugte optische Komponente einem Zwischen-Beugungselement (18) bereitzustellen, im Wesentlichen innerhalb der ersten und der zweiten Oberfläche,

weiter Beugen der gebeugten optischen Komponente durch das Zwischen-Beugungselement, und

Koppeln mindestens eines Teils der gebeugten optischen Komponente in dem Zwischen-Beugungselement an ein zweites Beugungselement (22), im Wesentlichen zwischen der ersten und der zweiten Oberfläche, um es zu gestatten, dass mindestens ein Teil der gekoppelten gebeugten optischen Komponente das Substrat durch Beugung in dem zweiten Beugungselement verlässt, um einen ausfallenden optischen Strahl bereitzustellen, der durch einen weiteren Wellenvektor **k1** definiert ist, der exakt die gleiche Richtung wie der Wellenvektor **k** des einfallenden optischen Strahls aufweist, um die Austrittspupille eines einfallenden optischen Strahls aufzuweiten,

wobei

das zweite Beugungselement in Bezug auf das erste Beugungselement auf dem Substrat angeordnet ist und weitere regelmäßige Linien mit einer Gitterkonstante d enthält und wobei ein Winkel zwischen den regelmäßigen Linien und den weiteren regelmäßigen Linien 2ρ beträgt; und

wobei das Zwischen-Beugungselement benachbart zu dem ersten und dem zweiten Beugungselementen angeordnet ist, und noch weitere regelmäßige Linien mit der Gitterkonstante d/2cos ρ enthält, wobei ρ ein Winkel zwischen den regelmäßigen Linien und den noch weiteren regelmäßigen Linien ist,

**dadurch gekennzeichnet, dass** der Winkel ρ im Wesentlichen gleich 60° ist.

9. Verfahren nach Anspruch 8, wobei die gebeugte optische Komponente auf das Zwischen-Beugungselement einfällt, und nachfolgend in eine Beugung erster Ordnung auf dem Zwischen-Beugungselement gebeugt wird, in einer ungeraden Anzahl von Malen, bevor der mindestens eine Teil der gebeugten Lichtkomponente dem zweiten Beugungselement bereitgestellt wird.

10. Verfahren nach Anspruch 8, wobei das Zwischen-Beugungselement konfiguriert ist, nur reflektive Beugungsmoden nullter und erster Ordnung zu unterstützen oder wobei ein Brechungsindex des Substrats $n > \lambda/d$ ist, wobei $\lambda$ eine Wellenlänge des einfallenden optischen Strahls ist.

11. Verfahren nach Anspruch 8, wobei das Zwischen-Beugungselement konfiguriert ist, Beugungsmoden der zweiten oder höheren Ordnung nicht zu unterstützen, was durch eine Bedingung erzwungen wird, die als

$$\sqrt{1 + 8\cos^2 \rho} > \frac{nd}{\lambda}$$

ausgedrückt wird, wobei n ein Brechungsindex des Substrats ist und wobei $\lambda$ eine Wellenlänge des einfallenden optischen Strahls ist.

12. Verfahren nach Anspruch 8, wobei das Zwischen-Beugungselement konfiguriert ist, Beugungs-Transmissionmoden nicht zu unterstützen, was durch eine Bedingung erzwungen wird, die als $\lambda/d > 1$ ausgedrückt wird, wobei $\lambda$ eine Wellenlänge des einfallenden optischen Strahls ist.

13. Verfahren nach Anspruch 8, wobei das erste Beugungselement, das zweite Beugungselement oder das Zwischen-Beugungselement auf der ersten Oberfläche oder auf der zweiten Oberfläche angeordnet ist.

14. Elektronische Vorrichtung, umfassend:

eine Datenverarbeitungseinheit,

ein optisches System, das betriebsfähig mit der Datenverarbeitungseinheit verbunden ist, um Bilddaten von der Datenverarbeitungseinheit zu empfangen,

eine Anzeigevorrichtung, die betriebsfähig mit dem optischen System verbunden ist,

um basierend auf den Bilddaten ein Bild zu bilden, und

eine Austrittspupillen-Aufweitungseinrichtung,

wobei die Austrittspupillen-Aufweitungseinrichtung die optische Vorrichtung von einem oder mehreren der Ansprüche 1 bis 7 ist.

15. Elektronische Vorrichtung nach Anspruch 14, wobei das Zwischen-Beugungselement konfiguriert ist, nur reflektive Beugungsmoden nullter und erster Ordnung zu unterstützen oder wobei ein Brechungsindex des Substrats $n > \lambda/d$ ist, wobei $\lambda$ eine Wellenlänge des einfallenden optischen Strahls ist.

16. Elektronische Vorrichtung nach Anspruch 14, wobei das Zwischen-Beugungselement konfiguriert ist, Beugungsmoden einer zweiten oder höheren Ordnung nicht zu unterstützen, was durch eine Bedingung erzwungen wird, die als $\sqrt{1+8\cos^2\rho} > \dfrac{nd}{\lambda}$ ausgedrückt wird, wobei n ein Brechungsindex des Substrats ist, und wobei λ eine Wellenlänge des einfallenden optischen Strahls ist.

17. Elektronische Vorrichtung nach Anspruch 14, wobei das Zwischen-Beugungselement konfiguriert ist, Beugungs-Transmissionsmoden nicht zu unterstützten, was durch eine Bedingung erzwungen wird, die als λ/d > 1 ausgedrückt wird, wobei λ eine Wellenlänge des einfallenden optischen Strahls ist.

18. Elektronische Vorrichtung nach Anspruch 14, wobei die elektronische Vorrichtung eine Digitalkamera, eine Computerspielvorrichtung, eine drahtlose Vorrichtung, eine tragbare Vorrichtung oder ein mobiles Endgerät ist.

19. Elektronische Vorrichtung nach Anspruch 14, weiter umfassend eine Kommunikationseinheit, um Signale zu empfangen, die Informationen enthalten, die die Bilddaten darstellen, wobei die Datenverarbeitungseinheit betriebsfähig mit der Kommunikationseinheit verbunden ist, um die Informationen zu empfangen.

20. Mobiltelefon umfassend die optische Vorrichtung von einem oder mehreren der Ansprüche 1 bis 7.

## Revendications

1. Dispositif optique, comprenant :

   un substrat (12) de matériau optique ayant une première surface et une seconde surface opposée ;
   un premier élément de diffraction (14) disposé sur le substrat pour recevoir un faisceau optique d'entrée défini par un vecteur d'onde **k** et contenant des lignes périodiques avec une période d ;
   un deuxième élément de diffraction (22) disposé sur le substrat en relation avec le premier élément de diffraction et contenant des lignes périodiques supplémentaires avec une période d, dans lequel un angle entre lesdites lignes périodiques et lesdites lignes périodiques supplémentaires est égal à 2 ρ, et
   un élément de diffraction intermédiaire (18) disposé sur ledit substrat de manière adjacente au premier et au deuxième élément de diffraction et contenant des lignes périodiques encore supplémentaires avec la période d/2cos ρ, dans lequel ρ est un angle entre lesdites lignes périodiques et les lignes périodiques encore supplémentaires, dans lequel le dispositif optique est configuré de telle sorte que
   au moins une partie du faisceau optique d'entrée est diffracté dans le premier élément de diffraction pour fournir une composante optique diffractée à l'élément de diffraction intermédiaire sensiblement à l'intérieur des première et seconde surfaces, et
   au moins une partie de la composante optique diffractée dans l'élément de diffraction intermédiaire est couplée au deuxième élément de diffraction sensiblement entre les première et seconde surfaces de manière à permettre au moins à une partie de la composante optique diffractée couplée de sortir du substrat par diffraction dans le deuxième élément de diffraction pour fournir un faisceau optique de sortie défini par un vecteur d'onde supplémentaires **k1** ayant exactement la même direction que le vecteur d'onde **k** dudit faisceau optique d'entrée, **caractérisé en ce que** ledit angle ρ est sensiblement égal à 60 °.

2. Dispositif optique selon la revendication 1, dans lequel ledit dispositif optique est destiné à permettre l'extension d'une pupille de sortie dudit faisceau optique d'entrée en fournissant ledit faisceau optique de sortie.

3. Dispositif optique selon la revendication 1, dans lequel le dispositif optique est configuré de telle sorte que ladite composante optique diffractée est incidente et ensuite diffractée jusqu'à un premier ordre de diffraction sur l'élément de diffraction intermédiaire, un nombre impair de fois avant de fournir ladite au moins une partie de la composante de lumière diffractée audit deuxième élément de diffraction.

4. Dispositif optique selon la revendication 1, dans lequel ledit élément intermédiaire de diffraction est configuré pour supporter uniquement des modes de diffraction de premier ordre ou d'ordre zéro réflectifs, ou un indice de réfraction dudit substrat est n > λ / d, dans lequel λ est une longueur d'onde du faisceau optique d'entrée.

5. Dispositif optique selon la revendication 1, dans lequel l'élément de diffraction intermédiaire est configuré pour ne pas supporter un mode de diffraction de second ordre ou d'ordre supérieur, lequel est mis en application par une condition exprimée en tant que $\sqrt{1 + 8\cos^2 \rho} > \dfrac{nd}{\lambda}$, dans lequel n est un indice de réfraction dudit substrat, $\lambda$ est une longueur d'onde du faisceau optique d'entrée.

6. Dispositif optique selon la revendication 1, dans lequel le dispositif optique est configuré de telle sorte qu'une condition prédéterminée est maintenue, ladite condition étant que les modes de diffraction de transmission ne sont pas pris en charge par ledit élément de diffraction intermédiaire, lequel est mis en application par une condition exprimée en tant que $\lambda / d > 1$, dans lequel $\lambda$ est une longueur d'onde du faisceau optique d'entrée.

7. Dispositif optique selon la revendication 1, dans lequel ledit premier élément de diffraction, ledit deuxième élément de diffraction ou ledit élément de diffraction intermédiaire sont disposés sur ladite première surface ou sur ladite seconde surface.

8. Procédé pour étendre une pupille de sortie d'un faisceau optique d'entrée, ledit procédé comprenant les étapes suivantes consistant à :

recevoir le faisceau optique d'entrée défini par un vecteur d'onde k au niveau d'un premier élément de diffraction (14) contenant des lignes périodiques avec une période d et disposé sur un substrat (12) de matériau optique ayant une première surface et une seconde surface opposée ;
diffracter au moins une partie du faisceau optique d'entrée dans le premier élément de diffraction pour fournir une composante optique diffractée à un élément de diffraction intermédiaire (18) sensiblement à l'intérieur des première et seconde surfaces ;
diffracter en outre ladite composante optique diffractée par ledit élément de diffraction intermédiaire, et coupler au moins une partie de ladite composante optique diffractée dans l'élément de diffraction intermédiaire à un deuxième élément de diffraction (22) sensiblement entre les première et seconde surfaces de manière à permettre à au moins une partie de la composante optique diffractée couplée de sortir du substrat par diffraction dans le second élément de diffraction pour fournir un faisceau optique de sortie défini par un vecteur d'onde **k1** supplémentaire ayant exactement la même direction que le vecteur d'onde **k** dudit faisceau optique d'entrée pour une extension de la pupille de sortie d'un faisceau optique d'entrée, dans lequel
ledit deuxième élément de diffraction est disposé sur ledit substrat en relation avec le premier élément de diffraction et contient des lignes périodiques supplémentaires avec une période d et dans lequel un angle entre lesdites lignes périodiques et lesdites lignes périodiques supplémentaires est égal à 2 $\rho$ et
ledit élément de diffraction intermédiaire est disposée de manière adjacente au premier et au deuxième élément de diffraction et contient des lignes périodiques encore supplémentaires avec la période d/2cos $\rho$, dans lequel $\rho$ est un angle entre lesdites lignes périodiques et les lignes périodiques encore supplémentaires, **caractérisé en ce que** ledit angle $\rho$ est sensiblement égal à 60 °.

9. Procédé selon la revendication 8, dans lequel ladite composante optique diffractée est incidente et ensuite diffractée jusqu'à un premier ordre de diffraction sur l'élément de diffraction intermédiaire, un nombre impair de fois avant que ladite au moins une partie de la composante de lumière diffractée ne soit fournie audit deuxième élément de diffraction.

10. Procédé selon la revendication 8, dans lequel ledit élément intermédiaire de diffraction est configuré pour supporter uniquement des modes de diffraction de premier ordre ou d'ordre zéro réflectifs, ou un indice de réfraction dudit substrat est n > $\lambda$ / d, dans lequel $\lambda$ est une longueur d'onde du faisceau optique d'entrée.

11. Procédé selon la revendication 8, dans lequel l'élément de diffraction intermédiaire est configuré pour ne pas supporter un mode de diffraction de second ordre ou d'ordre supérieur, lequel est mis en application par une condition exprimée en tant que $\sqrt{1 + 8\cos^2 \rho} > \dfrac{nd}{\lambda}$ , dans lequel n est un indice de réfraction dudit substrat, $\lambda$ est une longueur d'onde du faisceau optique d'entrée.

12. Procédé selon la revendication 8, dans lequel l'élément de diffraction intermédiaire est configuré pour ne pas supporter de modes de diffraction de transmission, lequel est mis en application par une condition exprimée en tant que $\lambda / d > 1$, dans lequel $\lambda$ est une longueur d'onde du faisceau optique d'entrée.

**13.** Procédé selon la revendication 8, dans lequel ledit premier élément de diffraction, ledit deuxième élément de diffraction ou ledit élément de diffraction intermédiaire sont disposés sur ladite première surface ou sur ladite seconde surface.

**14.** Dispositif électronique, comprenant :

une unité de traitement de données ;
un moteur optique relié de façon fonctionnelle à l'unité de traitement de données pour recevoir des données d'image en provenance de l'unité de traitement de données ;
un dispositif d'affichage relié de façon fonctionnelle au moteur optique pour former une image sur la base des données d'image ; et
un extenseur de pupille de sortie,
ledit extenseur de pupille de sortie étant le dispositif optique selon l'une ou plusieurs des revendications 1 à 7.

**15.** Dispositif électronique selon la revendication 14, dans lequel ledit élément de diffraction intermédiaire est configuré pour supporter uniquement des modes de diffraction de premier ordre ou d'ordre zéro réflectifs, ou un indice de réfraction dudit substrat est n > λ / d, dans lequel λ est une longueur d'onde du faisceau optique d'entrée.

**16.** Dispositif électronique selon la revendication 14, dans lequel l'élément de diffraction intermédiaire est configuré pour ne pas supporter un mode de diffraction de second ordre ou d'ordre supérieur, lequel est mis en application par une condition exprimée en tant que $\sqrt{1 + 8\cos^2 \rho} > \dfrac{nd}{\lambda}$, dans lequel n est un indice de réfraction dudit substrat, λ est une longueur d'onde du faisceau optique d'entrée.

**17.** Dispositif électronique selon la revendication 14, dans lequel l'élément de diffraction intermédiaire est configuré pour ne pas supporter de modes de diffraction de transmission, lequel est mis en application par une condition exprimée en tant que λ / d > 1, dans lequel λ est une longueur d'onde du faisceau optique d'entrée.

**18.** Dispositif électronique selon la revendication 14, dans lequel ledit dispositif électronique est un appareil photo numérique, un dispositif de jeu vidéo, un dispositif sans fil, un dispositif portable ou un terminal mobile.

**19.** Dispositif électronique selon la revendication 14, comprenant en outre une unité de communication pour recevoir des signaux contenant des informations indicatives des données d'image, dans lequel l'unité de traitement de données est reliée de façon fonctionnelle à l'unité de communication pour recevoir les informations.

**20.** Un téléphone mobile comprenant le dispositif optique selon une ou plusieurs des revendications 1 à 7.

FIG. 1
(prior art)

FIG. 2

100

210

```
┌─────────────────────────────────┐
│  ┌───────────────────────────┐  │
│  │                           │  │  212
│  │      Communication        │  │
│  │          unit             │  │
│  └───────────────────────────┘  │
│                                 │
│  ┌───────────────────────────┐  │  214
│  │    Control & processing   │  │
│  │           unit            │  │
│  └───────────────────────────┘  │
│                                 │
│  ┌───────────────────────────┐  │
│  │  ┌─────────────────────┐  │  │  192
│  │  │     Microdisplay    │  │  │
│  │  └─────────────────────┘  │  │  190
│  │  ┌─────────────────────┐  │  │
│  │  │   Optical engine    │  │  │
│  │  └─────────────────────┘  │  │  10
│  │  ┌─────────────────────┐  │  │
│  │  │  Exit pupil extender │  │  │
│  │  └─────────────────────┘  │  │
│  └───────────────────────────┘  │
│   230                           │
└─────────────────────────────────┘
```

# FIG. 3

**EP 1 938 152 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9952002 A
- US 6580529 B
- US 11011481 B
- US 20060126181 A